# FASCICULE DE BREVET EUROPEEN

(11) **EP 1 775 072 B1**
(45) Date de publication et mention de la délivrance du brevet: **07.05.2008**
(21) Numéro de dépôt: 06291598.8
(22) Date de dépôt: 13.10.2006
(51) Int. Cl.: B25B 5/14, B23Q 7/04, B23K 37/053

(54) **Dispositif de préhension et de manipulation de pièces cylindriques, ligne d'assemblage avec un tel dispositif et procédé d'assemblage associé**
Einrichtung zum Greifen und Handhaben von zylindrischen Teilen, Montageanlage mit einer solchen Einrichtung und assoziiertes Montageverfahren
Gripping and handling device for cylindrical parts, assembly line using this device and associated method of assembly

(30) Priorité: 14.10.2005 FR 0510498
(43) Date de publication de la demande: 18.04.2007
(73) Titulaire: Valmont France, 03110 Charmeil (FR)
(72) Inventeur: Carrier, Pascal, 63720 Surat (FR); Benoit, Patrick, Le Pré Lagoutte, 03300 Cusset (FR); Arhaud, Daniel, 63540 Romagnat (FR)
(74) Mandataire: Bonnans, Arnaud

(56) Documents cités:
- US-A- 4 835 851
- US-A- 4 872 655
- US-A- 5 293 794

## Description

L'invention concerne un dispositif de préhension et de manipulation d'un fût, une ligne d'assemblage équipée d'un tel dispositif et un procédé d'assemblage associé.

La manipulation des fûts, qui constitue la partie essentielle des poteaux ou mâts, est généralement rendue délicate du fait de l'extension importante de ceux-ci dans leur direction axiale et de leur masse souvent conséquente. Ces difficultés sont encore accrues lorsque le fût est conique, ce qui est fréquemment souhaité de nos jours pour des raisons principalement esthétiques.

Les systèmes de préhension et de manipulation de fûts proposés jusqu'ici (voir par exemple le document US-4,872,655) sont complexes et ne permettent d'obtenir facilement un positionnement précis du fût manipulé, nécessaire lors des opérations d'assemblage du poteau, telle que par exemple l'opération de soudage d'une semelle sur le fût.

De ce fait, on s'en tient en général en pratique au transport des fûts sur un convoyeur, puis à sa manipulation manuelle lors des opérations d'assemblage, tel que le soudage de la semelle mentionnée ci-dessus.

Afin d'automatiser l'assemblage du fût, il est donc souhaitable de proposer un système de préhension et de manipulation qui permette par des moyens simples et sans nécessiter un encombrement trop important, un positionnement précis ainsi que les déplacements nécessités par l'opération d'assemblage concernée.

L'invention propose ainsi un dispositif de préhension d'un fût, comprenant :
- un bâti avec un évidement destiné à être traversé par le fût ;
- des moyens de serrage aptes à retenir le fût dans une position de travail, les moyens de serrage étant solidaires d'une partie mobile en rotation par rapport au bâti autour de l'axe défini par le fût dans sa position de travail,

caractérisé en ce que

le bâti et la partie mobile s'étendent respectivement sur une partie seulement de l'étendue angulaire autour dudit axe de manière à ménager une ouverture de passage du fût selon une direction perpendiculaire audit axe, ladite ouverture débouchant dans ledit évidement.

On peut ainsi déplacer le fût à travers cette ouverture, en général latérale, ce qui limite l'encombrement axial nécessaire à la manipulation du fût.

Selon un exemple de mise en oeuvre pratique, ledit axe et ladite direction sont substantiellement horizontaux.

Le bâti comprend par exemple un arceau centré sur ledit axe au sein duquel la partie mobile est montée à rotation. L'arceau peut s'étendre en pratique dans un plan vertical perpendiculaire audit axe.

L'arceau peut avoir la forme générale d'un C, ce qui permet de former l'ouverture latérale déjà mentionnée.

La partie mobile comprend par exemple une couronne rotative montée à rotation dans l'arceau. La couronne rotative peut également avoir la forme générale d'un C, et participe ainsi à la formation de l'ouverture latérale.

Selon un mode de réalisation présenté plus loin, les moyens de serrage comprennent une paire de mâchoires aptes à enserrer le fût dans sa position de travail. Un moteur d'entraînement d'au moins une mâchoire est par exemple solidaire de la partie mobile.

Chaque mâchoire peut s'étendre selon une direction essentiellement horizontale et être apte à être déplacée verticalement pour venir enserrer le fût.

On peut prévoir un mécanisme entraînant un déplacement simultané des mâchoires au cours duquel les mâchoires sont équidistantes dudit axe. Les moyens de serrage sont ainsi aptes à enserrer des fûts sur une large gamme de diamètre et à les centrer automatiquement sur ledit axe.

Le bâti peut être monté sur une base autorisant un mouvement de pivotement du bâti autour d'un axe vertical perpendiculaire à l'axe défini par le fût dans sa position de travail, ce qui permet d'utiliser le fût dans différentes positions, par exemple sur deux parties d'une ligne d'assemblage.

Le dispositif peut comprendre des moyens de détection d'une ouverture dans le fût à une position donnée de sa circonférence. On peut ainsi assembler le fût à une position angulaire déterminée par rapport à cette ouverture du fût.

L'invention propose également une ligne d'assemblage de fût qui comprend au moins un dispositif de préhension comme précédemment évoqué.

La ligne d'assemblage peut comprendre au moins un support situé à la verticale dudit axe et éventuellement au moins un convoyeur apte à déplacer un fût vers ledit support.

Selon un mode de réalisation dont un exemple est décrit ci-après, la ligne d'assemblage comprend des moyens pour placer une semelle au contact du fût, des moyens pour effectuer une rotation concomitante de la semelle et de la partie mobile retenant le fût, et des moyens pour réaliser, au moyen de ladite rotation, la soudure d'une partie au moins de la circonférence du fût à la semelle.

La rotation permet ainsi de réaliser le soudage circonférentiel par des moyens simples et peu encombrants.

La ligne d'assemblage de fût peut comprendre une zone de réception du fût après passage à travers ladite ouverture du bâti. On profite ainsi de cette ouverture pour l'évacuation du fût assemblé. Ladite zone est par exemple latérale par rapport audit axe.

L'invention propose également un procédé d'assemblage d'un fût et d'une semelle mettant en oeuvre un dispositif de préhension du fût comprenant un bâti, caractérisé en ce qu'il comprend les étapes suivantes :
- serrage du fût dans une position de travail par des moyens solidaires d'une partie mobile en rotation dans le bâti qui comprend un évidement traversé par le fût ;
- rotation de la partie mobile autour de l'axe défini par le fût dans sa position de travail, permettant ainsi le soudage d'une partie au moins de la circonférence du fût à la semelle.

On effectue ainsi le soudage sur la partie de circonférence par des moyens simples et peu encombrants.

L'outil effectuant le soudage peut alors être fixe par rapport au bâti pendant ladite étape de rotation, ce qui simplifie le procédé.

Le procédé comprend par exemple une étape de mise au contact du fût et de la semelle préalable à l'étape de rotation.

Le procédé peut également comprendre une étape, préalable à l'étape de rotation, de dépôt de soudure sur une seconde partie de ladite circonférence, la partie mobile restant fixe par rapport au bâti. Cette étape préalable permet une première solidarisation du fût à la semelle, qui simplifie l'étape de rotation postérieure.

Selon un mode de réalisation limitant l'extension axiale du système, le procédé comprend les étapes suivantes :
- déplacement du dispositif de préhension dans une zone de réception du fût ;
- dépôt du fût sur ladite zone de réception ;
- évacuation latérale du fût à travers une ouverture ménagée dans l'étendue angulaire du bâti autour de l'axe défini par le fût dans sa position de travail.

Le procédé peut également comprendre une étape, préalable au soudage, de rotation de la partie mobile jusqu'à la détection d'une ouverture dans le fût afin de positionner angulairement le fût avant son assemblage à la semelle.

D'autres caractéristiques et avantages de l'invention apparaîtront à la lumière de la description qui suit, faite en référence aux dessins annexés, dans lesquels :
- la figure 1 représente une vue d'ensemble d'une ligne de soudage automatisée de semelles sur des fûts incorporant des dispositifs conformes aux enseignements de l'invention ;
- les figures 2 et 3 représentent des vues de détail d'un dispositif de préhension de fûts de la ligne présentée en figure 1 ;
- les figures 4 à 6 représentent diverses positions prises par les robots de la ligne représentée à la figure 1 au cours de leur utilisation ;
- la figure 7 représente un mandrin préhenseur de semelle d'un robot de la ligne représentée à la figure 1 ;
- la figure 8 représente le système d'entraînement en rotation du dispositif de préhension des figures 2 et 3.

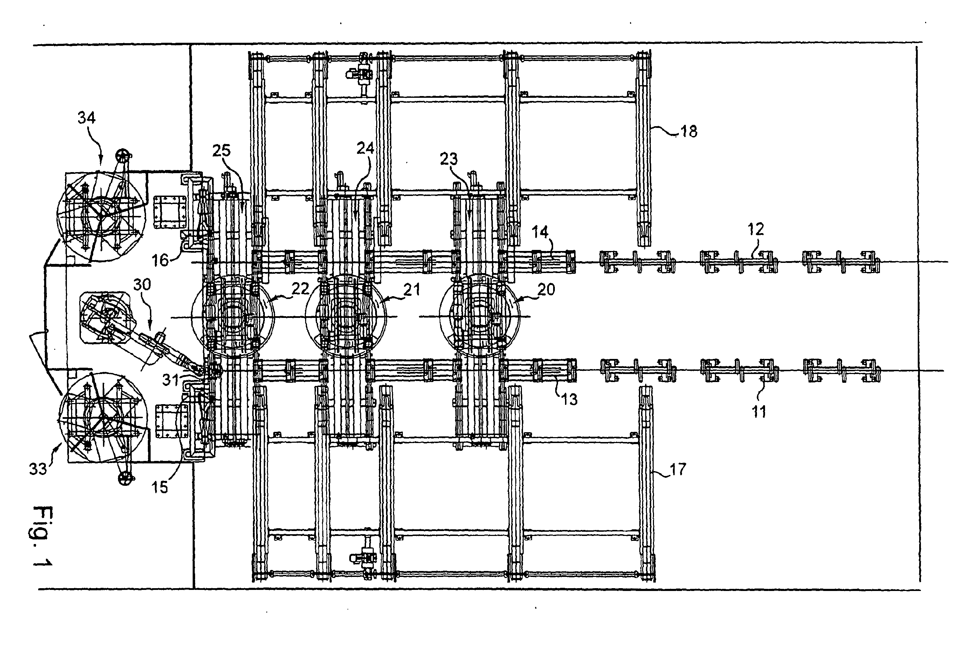

Dans l'exemple de mise en oeuvre de l'invention représentée en figure 1, les fûts à assembler peuvent être acheminés vers la ligne de soudage au moyen d'un premier ensemble de convoyeurs à rouleaux 11 ou d'un second ensemble de tels convoyeurs 12.

La ligne d'assemblage représentée à la figure 1 comprend en effet deux parties qui fonctionnent comme deux lignes parallèles, ce qui permet par exemple d'assembler des poteaux de deux types, qui sont traités chacun sur une partie dédiée de la ligne, en utilisant toutefois les mêmes dispositifs de manipulation et d'assemblage comme décrit plus loin.

En variante, on pourrait naturellement envisager une ligne d'assemblage ne comprenant qu'une seule des deux parties précédemment mentionnées.

Chaque ensemble de convoyeurs à rouleaux 11, 12, 13 14 forme un support et permet le maintien des fûts dans une position essentiellement horizontale et leur transport selon leur axe principal. Pour ce faire, les convoyeurs (ou une partie d'entre eux seulement) sont par exemple motorisés.

Le premier ensemble de convoyeurs 11, 13 permet le déplacement des fûts qu'il reçoit vers une première position d'assemblage, tandis que le second ensemble de convoyeurs 12, 14 permet le déplacement des fûts qu'il reçoit vers une seconde position d'assemblage.

Chacun des ensembles de convoyeurs ou supports 11, 12, 13, 14 détermine ainsi l'orientation axiale dans le plan horizontal des fûts à assembler au début de l'opération d'assemblage décrite ci-après.

Des butées escamotables 15, 16 sont prévues aux extrémités longitudinales de chaque ensemble de supports 11, 12, 13, 14 opposées à la région d'arrivée des fûts à assembler. Chaque butée escamotable 15, 16 définit ainsi (dans sa position active non escamotée) précisément la position axiale du fût selon l'axe de l'ensemble de supports correspondant 11, 12, 13, 14 (c'est-à-dire la position du fût à assembler dans la direction de son propre axe).

Chacun des supports 11, 12, 13, 14 est formé principalement par une rainure en forme de V qui permet d'assurer le positionnement du fût à assembler au contact de la butée escamotable 15, 16 correspondante.

La ligne d'assemblage représentée à la figure 1 comprend également trois dispositifs de préhension et de manipulation des fûts 20, 21, 22. Chacun de ces dispositifs comprend un carter ayant la forme générale d'un C dans un plan vertical essentiellement perpendiculaire à la direction des supports 11, 12, 13, 14 (c'est-à-dire la direction principale des fûts à assembler). On dénommera de ce fait dans la suite les dispositifs de préhension et de manipulation "Cés".

Chaque dispositif ou Cé 20, 21, 22 est mobile en translation sur une glissière correspondante 23, 24, 25 selon une direction horizontale et perpendiculaire aux ensembles de support 11, 12, 13, 14 (c'est-à-dire perpendiculaire aux fûts à assembler) et peut ainsi être déplacé de part et d'autre de chaque ensemble de supports 11, 12, 13, 14 (entre les espacements laissés libres entre les différents supports d'un même ensemble).

Chaque glissière 23, 24, 25 s'étend de chaque côté au-delà de l'ensemble de supports 11, 12, 13, 14, dans des régions où des ripeurs automatiques 17, 18 sont aptes à recevoir les fûts après assemblage pour leur évacuation latérale à l'ensemble de supports correspondant 11, 12, 13, 14.

Comme décrit plus en détail dans la suite, les Cés permettent la saisie, puis le serrage concentrique des fûts à assembler, et par là même le positionnement vertical précis du fût saisi ; les Cés permettent en outre une rotation du fût saisi autour de son axe d'une part pour le positionnement angulaire de celui-ci, et d'autre part pour sa rotation lors du dépôt de la soudure, comme expliqué plus loin.

La ligne d'assemblage représentée à la figure 1 comprend un robot de soudage (non représenté en figure 1) et un robot de manipulation des semelles 30 équipé à l'extrémité de son bras d'un mandrin préhenseur 31. Le robot de manipulation 30 saisit au moyen de son mandrin préhenseur 31 une semelle à assembler dans l'une de deux tables rotatives 33, 34 prévues pour le stockage des semelles à assembler (par exemple dans trois paniers de stockage, chaque panier pouvant être placé au droit du robot 30 par rotation de la table qui le porte), puis déplace la semelle saisie au contact du fût maintenu par les Cés précédemment mentionnés ; il peut alors être procédé au soudage de ces deux éléments selon des modalités expliquées en détail plus loin.

En considérant un fût arrivant sur l'ensemble de convoyeurs à rouleaux 11, les étapes principales de son traitement sur la ligne d'assemblage de la figure 1 sont donc les suivantes :
- transport du fût sur le premier ensemble de supports 11, 13, jusqu'au contact de la butée escamotable 15 ;
- déplacement des Cés 20, 21, 22 sur les glissières 23, 24, 25 au droit du premier ensemble de supports 11, 13 et saisie du fût par les trois Cés 20, 21, 22 (par fermeture de mâchoires comme expliqué plus bas) ;
- déplacement de la butée escamotable 15 en dehors de l'axe du premier ensemble de supports 11, 13 ;
- saisie d'une semelle par le mandrin préhenseur 31 du robot de soudage 30 ;
- déplacement de la semelle au contact du fût à assembler au moyen du robot 30 ;
- soudage des deux pièces par le robot 30 avec rotation du fût au moyen des Cés 20, 21, 22 ;
- déplacement des Cés dans la région des ripeurs automatiques 17 au moyen des glissières 23, 24, 25 ;
- dépôt du fût et de la semelle assemblés sur les ripeurs automatiques 17 au moyen des Cés 20, 21, 22.

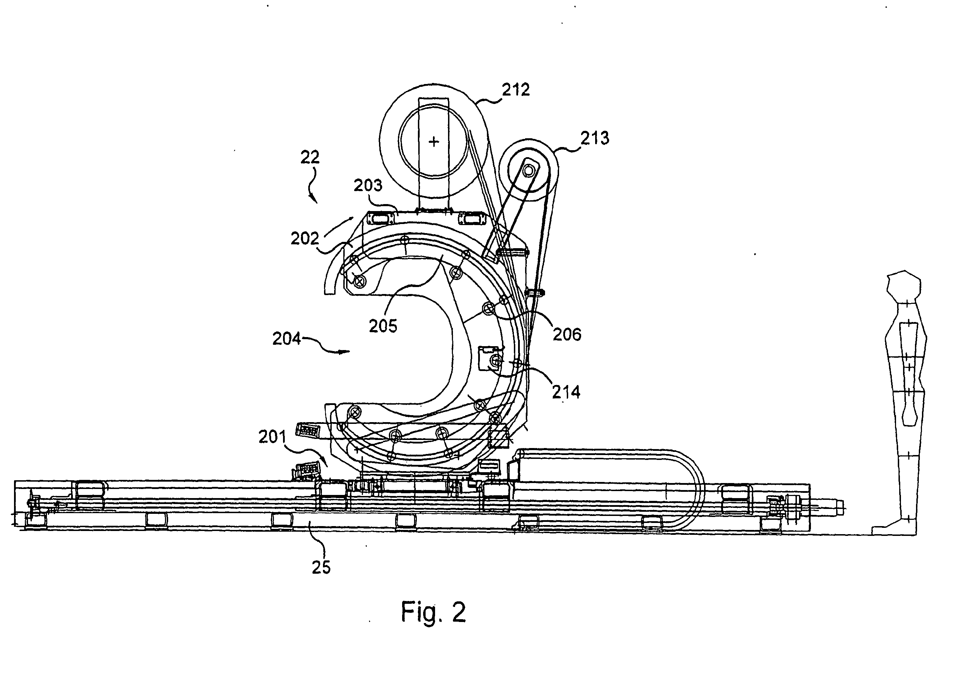

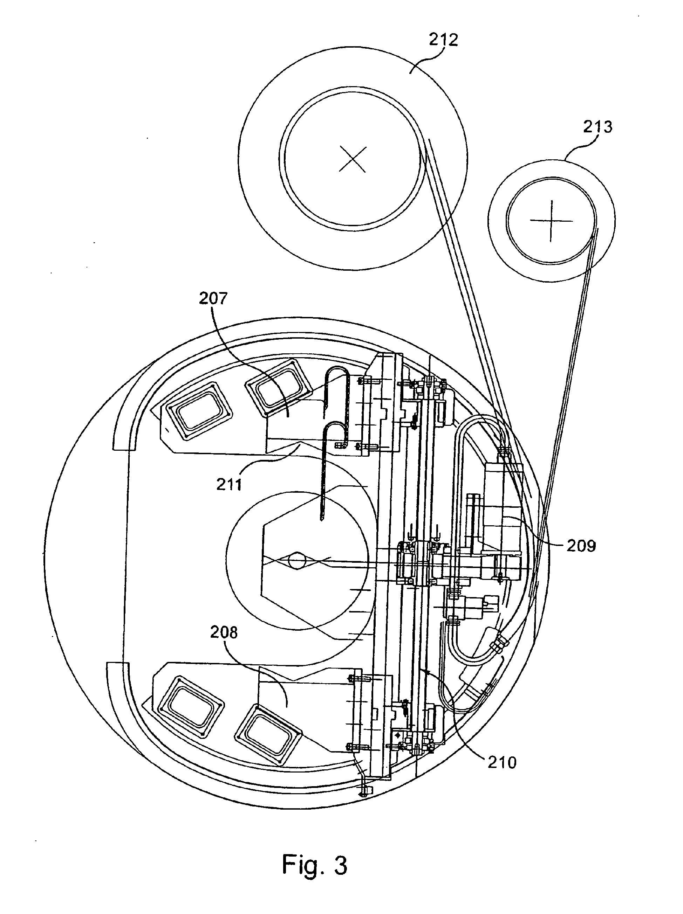

On va à présent décrire plus en détail les Cés de préhension en référence aux figures 2 et 3 sur lesquelles on a représenté le Cé de préhension 22, c'est-à-dire celui situé à proximité des butées escamotables 15, 16 et du robot 30.

Les deux autres Cés de préhension 20, 21 sont construits de manière analogue au Cé 22 décrit en détail ici, sauf quand cela sera expressément précisé.

Comme déjà mentionné, le Cé de préhension 22 est mobile en translation sur une glissière 25 selon une direction horizontale perpendiculaire à l'axe des ensembles de supports 13,14 (c'est-à-dire perpendiculaire à l'axe des fûts à assembler).

Le Cé 22 est monté sur une base 201 mobile en translation sur la glissière 25 et qui permet en outre un mouvement de pivotement du Cé 22 sur lui-même autour d'un axe vertical. Ce mouvement de pivotement est par exemple entraîné par un moteur logé dans la base 201.

Un flexible permet de réaliser les différentes liaisons par câble du bâti fixe à la partie de la base 201 mobile en translation sur la glissière 25.

La partie supérieure de la base 201 (c'est-à-dire la partie pivotante par rapport à la glissière 25) porte un arceau 202 et un carter 203, tout deux fixes par rapport à la partie supérieure de la base 201.

L'arceau s'étend dans un plan vertical avec une forme circulaire dont le centre est situé au droit des ensembles de supports 13 lorsque le Cé préhenseur est en position de saisie du fût sur l'ensemble de supports 13 ; l'arceau 202 ne s'étend toutefois pas sur l'ensemble de la circonférence, mais seulement sur une étendue angulaire de l'ordre de 300°, ce qui permet de ménager une ouverture 204 qui pourra être traversée par le fût lors des différentes opérations de manipulation de celui-ci comme décrit plus loin.

Le carter 203 recouvre pour l'essentiel l'arceau 202 et présente donc également une ouverture au niveau de l'ouverture 204 précitée.

Ainsi, l'arceau 202 et le carter 203 donnent au dispositif de préhension la forme générale de C déjà évoquée.

Le Cé de préhension 22 comporte en outre une partie mobile 205 montée à rotation au sein de l'arceau 202 au niveau d'une couronne rotative concentrique à l'arceau 202 et qui s'étend comme ce dernier sur une partie seulement de circonférence de façon à ménager une ouverture dans la partie mobile 205. La partie mobile 205 est capable d'un mouvement de rotation autour de l'axe de l'arceau (qui correspond en pratique à l'axe du fût à assembler) entraîné par exemple par un système à crémaillère.

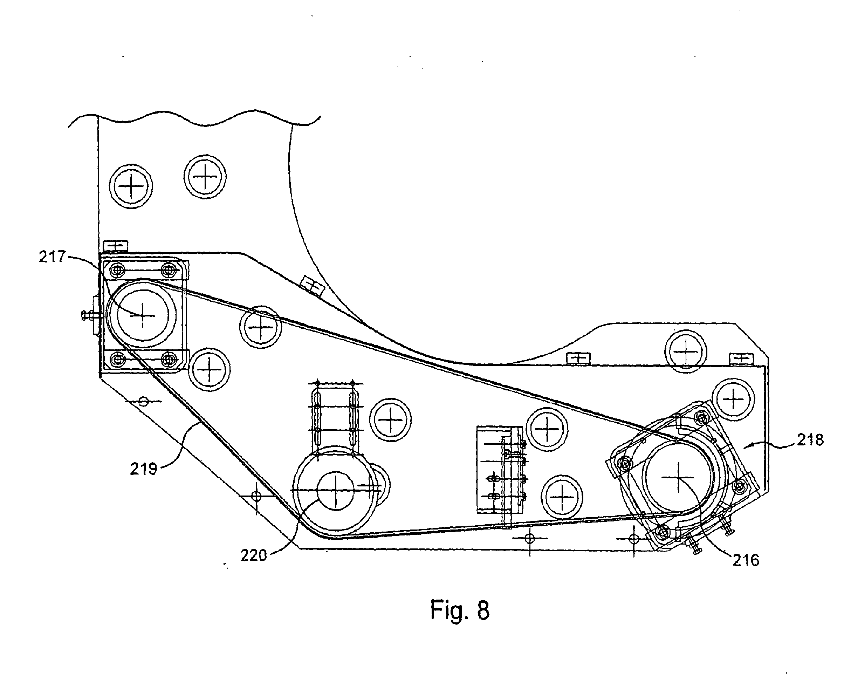

Afin de pouvoir entraîner la couronne rotative quelle que soit la position de celle-ci et malgré l'ouverture ménagée sur sa circonférence, le système à crémaillère comprend deux poulies d'entraînement 216, 217 espacées angulairement d'un angle supérieur à l'ouverture 204, comme visible en figure 8. Ainsi, quelle que soit la position de la couronne rotative, l'une au moins des poulies 216, 217 engrène avec des dents formées sur la circonférence extérieure de la couronne rotative. L'une des poulies 216 est par exemple située sur l'axe d'un moteur associé 218 alors que l'autre poulie 217 est entraînée par ce moteur 218 à travers une courroie 219 tendue par une poulie de tension 220.

Pour ce faire, la partie mobile 205 est par exemple montée au niveau de la couronne rotative sur l'ensemble arceau 202 - carter 203 au moyen d'une pluralité de galets 206.

La partie mobile 205 porte des éléments visibles sur la figure 3 : il s'agit principalement d'une mâchoire supérieure 207 et d'une mâchoire inférieure 208, toutes deux d'extension essentiellement horizontale et qui peuvent être déplacées l'une vers l'autre par des mouvements verticaux simultanés, vers le bas pour la mâchoire supérieure 207 et vers le haut pour la mâchoire inférieure 208. Un tel mouvement est par exemple entraîné par un moteur 209 également porté par la partie mobile 205 et des mécanismes appropriés 210 qui permettent de réaliser simultanément les deux mouvements précités. On réalise ainsi un serrage concentrique du fût, par exemple un serrage concentrique synchronisé.

Lorsqu'un fût est disposé à l'intérieur du Cé de préhension (c'est-à-dire que l'axe du fût est perpendiculaire au plan vertical dans lequel s'étend le Cé), le rapprochement de la mâchoire supérieure 207 et la mâchoire inférieure 208 se déroule jusqu'à ce que les mâchoires 207, 208 enserrent le fût, précisément au niveau d'une rainure en V 211 prévue sur chacune des mâchoires 207, 208. Du fait que le centre du dispositif de préhension (c'est-à-dire également le centre de l'arceau 202) est situé au droit de l'ensemble de supports 13, 14 concerné, le rapprochement concomitant des mâchoires 207, 208 permet tout d'abord l'entrée en contact de la mâchoire inférieure 208 et du fût, puis le soulèvement de celui-ci, et l'entrée en contact de la mâchoire supérieure 207 et du fût, et ce quel que soit le diamètre de celui-ci. La position finale des mâchoires 207, 208 (une fois le fût saisi) est représentée en pointillés sur la figure 3.

Cette solution permet d'utiliser le système pour une large gamme de diamètres des fûts. Pour cette même raison, les trois Cés préhenseurs 20, 21, 22 utilisés à différentes positions longitudinales sur le fût à assembler peuvent être de conception identique bien que les fûts traités soient généralement coniques.

Comme visible sur les figures 2 et 3, le Cé de préhension 22 porte un premier enrouleur 212 et un second enrouleur 213. Chaque enrouleur 212, 213 permet le stockage et le déroulement éventuel de câbles de transmission d'énergie et/ou de signaux des parties solidaires de l'arceau 202 et du carter 203 aux parties solidaires de la partie mobile en rotation 205.

Précisément, le premier enrouleur 212 porte un tuyau pneumatique pour l'alimentation du moteur 209 qui entraîne le rapprochement des mâchoires 207, 208, alors que le second enrouleur 213 porte un câble électrique multiconducteur qui permet l'échange des données entre les éléments mobiles en rotation et les parties liées au carter 203.

Le premier Cé 22 (et seulement celui-ci) est équipé en outre d'un capteur de distance (par exemple du type à faisceau laser) 214 dans le but de détecter, lors d'une rotation à cet effet du fût saisi par le Cé 22 autour de son axe (par rotation de la partie mobile 205), une ouverture ménagée dans la paroi du fût et destinée à recevoir une porte (ouverture permettant d'accéder à l'intérieur du fût une fois celui-ci en fonction). On peut ainsi déterminer la localisation de la porte sur le fût et effectuer l'assemblage de la semelle à une position angulaire précise par rapport à cette ouverture, comme expliqué plus loin.

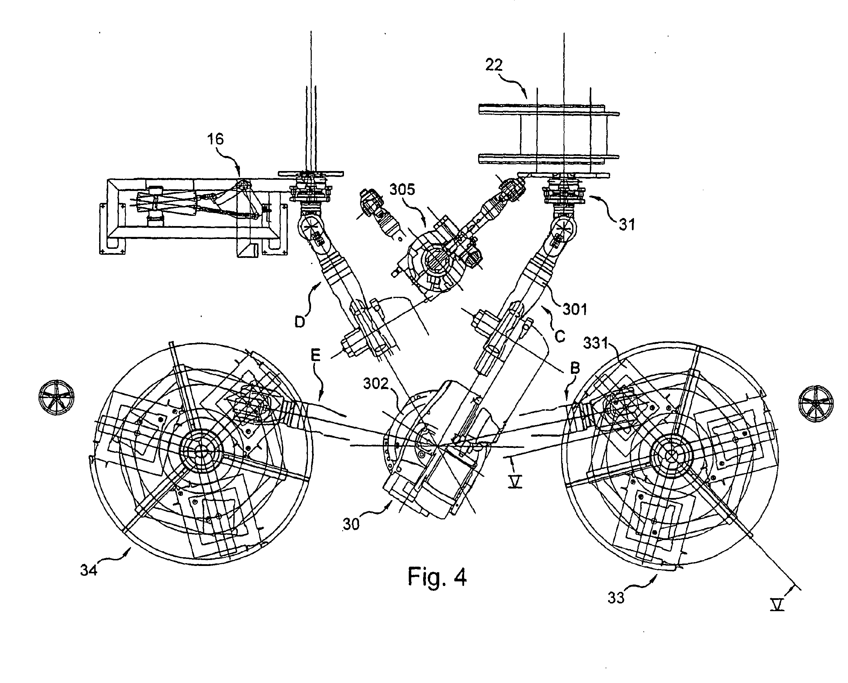

La figure 4 représente la région de la ligne d'assemblage où sont implantés les robots, à savoir le robot de manipulation de semelles 30 et le robot de soudage 310.

Le robot de manipulation 30 comprend une base 302 mobile en rotation autour d'un axe vertical ; la base 302 porte un bras articulé 301 à l'extrémité duquel est prévu un mandrin de préhension 31 déjà mentionné.

Le robot de soudage 305, ici fixé à une paroi horizontale située au-dessus du robot de manipulation 30, a une constitution analogue, mais une taille réduite ; par ailleurs, l'extrémité du bras articulé du robot de soudage 305 ne présente pas un mandrin, mais des moyens de soudage du type torche de soudage.

Le robot de manipulation 30 est situé environ à mi-distance entre les deux tables rotatives 33, 34, qui portent chacune trois paniers de stockage de semelles 331.

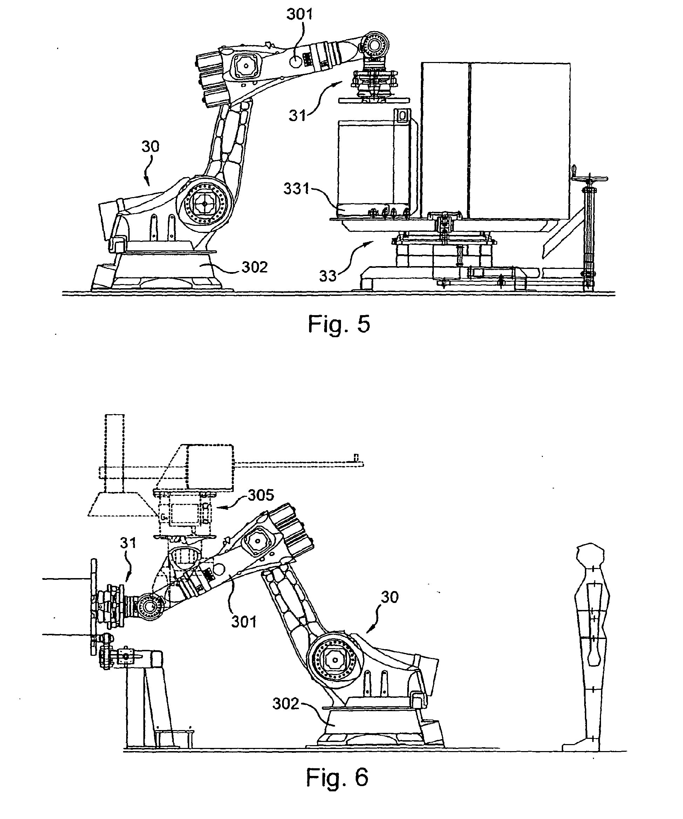

Le robot de manipulation 30 est apte à venir saisir, au moyen de son mandrin préhenseur 31, les semelles situées dans l'un des paniers de stockage 331 de chaque table rotative 33, 34. Le bras articulé 301 du robot de manipulation 30 a alors les positions indiquées par les repères B et E en figure 4. Une telle position du robot de manipulation 30 (telle qu'indiqué par la flèche B) est par ailleurs illustrée en figure 5.

Le robot de manipulation 30 est apte à transporter la semelle saisie dans le panier 331 vers une position située à proximité du Cé de préhension 22 dans laquelle la semelle vient en contact avec le fût maintenu notamment par le Cé 22. Naturellement, une telle position existe au droit de chaque ensemble de supports 13, 14 représentés en figure 1 : les deux positions correspondantes du bras articulé 301 sont respectivement indiquées par les lettres C et D en figure 4. Une de ces deux positions est par ailleurs illustrées en figure 6.

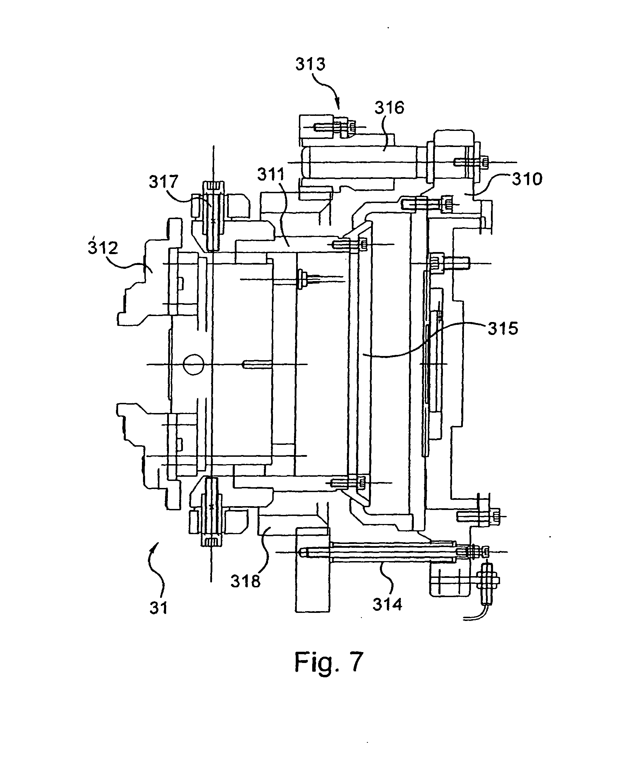

La figure 7 représente en détail le mandrin préhenseur 31 monté à l'extrémité du bras articulé 301 du robot de manipulation 30.

Ce mandrin préhenseur 31 comprend principalement une base 310 montée fixe à l'extrémité du bras articulé 301 et un corps 311 qui porte à son extrémité opposée à la base 310 (et donc au bras articulé 301) trois mors étagés 312 à 120° aptes à venir en prise en s'écartant sur l'alésage intérieure de la semelle à saisir (par la face de la semelle opposée à celle qui doit subir le soudage).

La base 310 et le corps 311 sont liés entre eux par un système mécanique 313 incluant des ressorts 314 des colonnes de guidage 316, un élément tubulaire 318 et des axes 317, qui permet d'assurer entre la base 310 et le corps 311 les deux liaisons mécaniques suivantes :
- lorsque pratiquement aucun effort axial ne tend à rapprocher le corps 311 et la base 310 (c'est-à-dire que les ressorts 314 ne sont pas comprimés par un tel effort), le corps 311 est solidaire de la base 310 grâce à l'engagement d'une cloche 315 du corps 311 dans la base 310 ;
- lorsque le corps 311 exerce sur la base 310 en direction de celle-ci un effort axial qui comprime les ressorts 314, le déplacement de l'élément tubulaire 318 dans les colonnes de guidage 316 et par suite celui du corps 311 provoque le dégagement de la cloche 315 de telle sorte que le corps 311 n'est plus lié à l'élément tubulaire 318 (monté en translation sur la base 310) que par deux axes orthogonaux 317 qui forment une liaison de type rotule entre la base 310 et le corps 311.

La compression des ressorts 314 jusqu'à dégager la cloche 315 se produit lors de la mise en appui (par le robot 30) de la semelle portée par le mors 312 sur le fût maintenu par les Cés de préhension. La liaison rotule obtenue alors permet avantageusement un rattrapage des jeux éventuels dans le positionnement axial du fût grâce au libre positionnement axial de la semelle.

On notera toutefois que, grâce au système de ressort 314, le maintien d'un appui (et donc d'un contact étroit) est assuré entre la semelle portée par le mandrin 31 et le fût maintenu dans les Cés 20, 21, 22.

On va à présent décrire la phase de soudage de la semelle sur le fût, qui fait suite aux étapes de saisie du fût de l'un des ensembles de supports 13, 14 par les Cés préhenseurs 20, 21, 22 comme déjà décrit précédemment.

Le robot de manipulation 30 pivote de telle sorte que son bras articulé 301 se situe au droit du panier de stockage 331 où sont stockées les semelles à assembler sur le fût saisi (position B ou E de la figure 4).

Le bras articulé 301 saisit au moyen du mandrin préhenseur 31 la semelle supérieure parmi les semelles empilées sur le panier de stockage 331, comme représenté en figure 5.

Le robot de manipulation 30 pivote alors jusqu'à ce que son bras articulé 301 se situe au droit du Cé préhenseur 22 qui maintient le fût à assembler (position C ou D représentée en figure 4 ; dans le cas de la figure 4, la position C permet de se situer au droit du Cé préhenseur 22 illustré).

Au préalable, la butée escamotable 15, 16 aura été escamotée afin de permettre d'amener la semelle saisie par le mandrin préhenseur 31 au contact du fût maintenu par les Cés préhenseurs.

La position angulaire de la semelle (par rapport à l'axe du mandrin préhenseur 31) est déterminée par la position de prise de la semelle dans les paniers ; par ailleurs, comme déjà vu, le fût maintenu par les Cés préhenseurs 20, 21, 22 a également une position angulaire déterminée grâce au système de détection de l'ouverture du fût (ou *"porte"*) déjà mentionnée et à une éventuelle rotation du fût pour l'amener dans une position désirée.

Ainsi, le fût et la semelle sont mis en contact dans une position angulaire relative déterminée, dans laquelle ils seront assemblés.

On rappelle par ailleurs que le système à ressorts du mandrin préhenseur 31 permet d'assurer un bon contact entre ces deux pièces et que la liaison rotule obtenue à cette étape permet d'ajuster éventuellement les défauts d'alignement des axes.

Une fois les pièces en contact dans leur position d'assemblage, le robot de soudage 305 vient déposer un cordon de soudure sur une partie limitée (typiquement 30°) de l'étendue angulaire de la circonférence du fût au contact de la semelle par une méthode de suivi de joint dans l'arc. On assure ainsi un début de liaison mécanique entre le fût et la semelle.

Après desserrage des mors à 120° 312 et tout en maintenant la pression de plaquage de la semelle sur le fût, on entraîne en rotation le fût au moyen d'une rotation de la partie mobile 205 (et par conséquent des mâchoires 207, 208) dans l'arceau 202 (au moyen d'un système à crémaillère non représenté en détail ici) ; la semelle est également entraînée en rotation avec une vitesse angulaire identique par le bras articulé 301 du robot de manipulation 30 (par exemple en envoyant au dispositif de préhension 20, 21, 22 et au robot 30 la même consigne de vitesse angulaire). Au cours de cette phase de rotation concomitante du fût et de la semelle, le robot de soudage 305 est immobile et dépose un cordon de soudure sur le reste de la circonférence du fût (ici 330°) grâce à la rotation de celui-ci.

Selon une possibilité de mise en oeuvre pratique, il est possible de retirer le mandrin préhenseur 31 de la semelle au cours de la rotation, lorsque la soudure a été déposée sur une partie suffisante de la circonférence pour permettre à elle seule le maintien de la semelle par rapport au fût (par exemple après une rotation de 180°).

La direction de rotation des parties mobiles 205 des Cés préhenseurs 20, 21, 22 au cours de cette phase de soudage est de préférence opposée à la direction de rotation utilisée lors de la détection de l'ouverture du fût. On réduit ainsi l'étendue angulaire maximale à prévoir pour la rotation de chaque Cé.

On peut prévoir que la liaison entre la semelle et le mors du mandrin préhenseur 31 autorise un glissement relatif de ces deux pièces en rotation afin de compenser une éventuelle différence de vitesse angulaire entre les parties mobiles 205 des Cés préhenseurs d'une part et le bras articulé 301 d'autre part.

Une fois le cordon de soudure déposé sur toute la périphérie de la zone de contact du fût et de la semelle, le bras articulé 301 s'éloigne de la semelle si ce mouvement n'a pas été précédemment réalisé selon la variante proposée plus haut.

On procède alors à une nouvelle rotation de la partie mobile 205 des Cés préhenseurs 20, 21, 22 de manière à ramener l'ouverture de la couronne rotative de la partie mobile au droit de l'ouverture 204 de l'arceau 202, afin de permettre la sortie latérale du fût comme décrit ci-après.

Les Cés préhenseurs 20, 21, 22 sont déplacés sur les glissières correspondantes 23, 24, 25 dans la région des ripeurs automatiques 17, 18 associés à la partie de la ligne d'assemblage au sein de laquelle le soudage a été réalisé. Le fût assemblé, toujours maintenu par les Cés préhenseurs 20, 21, 22, est alors situé à la verticale du ripeur automatique 17, 18 concerné.

On procède alors à l'écartement simultané des mâchoires 207, 208 (entraînées par le moteur 209 et le mécanisme 210), ce qui provoque notamment la descente du fût (soutenu au départ par la mâchoire inférieure 208) jusqu'au ripeur automatique concerné 17, 18, sur lequel le fût est par conséquent déposé, puis amené latéralement en dehors de la ligne d'assemblage. Cette sortie latérale est naturellement rendue possible du fait de l'existence de l'ouverture 204 dans l'ensemble des pièces qui forment chaque Cé préhenseur 20, 21, 22 et permet d'éviter l'encombrement axial important qui aurait été nécessaire si une sortie axiale avait été utilisée.

On remarque que l'ouverture 204 des Cés préhenseurs 20, 21, 22 est dirigée du côté souhaité pour la sortie latérale du fût assemblé grâce à son positionnement dans la direction adéquate avant la saisie du fût sur l'ensemble de supports 13, 14, et ce au moyen du pivotement de chacun des Cés préhenseurs 20, 21, 22 sur lui-même comme déjà mentionné. Précisément, lorsque l'on souhaite faire passer les Cés préhenseurs d'une partie de la ligne d'assemblage à l'autre, on déplace ceux-ci dans une région située entre les deux parties de ligne (c'est-à-dire entre le premier ensemble de supports 13 et le second ensemble de supports 14) où il existe un encombrement suffisant pour permettre le pivotement de chacun des Cés préhenseurs 20, 21, 22 sur lui-même, on effectue le pivotement de 180° de chaque Cé préhenseur, puis on déplace à nouveau les Cés préhenseurs sur leur glissière respective pour les amener au droit de l'ensemble de supports 13, 14 qui reçoit le nouveau fût à traiter.

Cette solution permet, avec des moyens simples, d'utiliser le même matériel pour deux parties de ligne d'assemblage qui peuvent ainsi être utilisées comme deux lignes d'assemblage distinctes, notamment par exemple quant aux caractéristiques des produits assemblés sur chacune d'elles.

Le mode de réalisation de l'invention qui vient d'être décrit ne représente qu'un exemple possible de mise en oeuvre de celle-ci.

## Revendications

1. Dispositif de préhension d'un fût, comprenant:
- un bâti (202, 203) avec un évidement destiné à être traversé par le fût ;
- des moyens de serrage (207, 208) aptes à retenir le fût dans une position de travail, les moyens de serrage (207, 208) étant solidaires d'une partie mobile (205) en rotation par rapport au bâti (202, 203) autour de l'axe défini par le fût dans sa position de travail, **caractérisé en ce que**
le bâti (202, 203) et la partie mobile (205) s'étendent respectivement sur une partie seulement de l'étendue angulaire autour dudit axe de manière à ménager une ouverture (204) de passage du fût selon une direction perpendiculaire audit axe, ladite ouverture (204) débouchant dans ledit évidement.

2. Dispositif selon la revendication 1, dans lequel axe et ladite direction sont substantiellement horizontaux.

3. Dispositif selon l'une des revendications 1 ou 2, dans lequel le bâti comprend un arceau (202) centré sur ledit axe au sein duquel la partie mobile (205) est montée à rotation.

4. Dispositif selon la revendication 3, dans lequel l'arceau (202) s'étend dans un plan vertical perpendiculaire audit axe.

5. Dispositif selon la revendication 3 ou 4, dans lequel l'arceau (202) a la forme générale d'un C.

6. Dispositif selon l'une des revendications 3 à 5, dans lequel la partie mobile (205) comprend une couronne rotative montée à rotation dans (202) l'arceau.

7. Dispositif selon la revendication 6, dans lequel la couronne rotative a la forme générale d'un C.

8. Dispositif selon l'une des revendications 1 à 7, dans lequel les moyens de serrage comprennent une paire de mâchoires (207, 208) aptes à enserrer le fût dans sa position de travail.

9. Dispositif selon la revendication 8, avec un moteur d'entraînement (209) d'au moins une mâchoire (207, 208) solidaire de la partie mobile (205).

10. Dispositif selon la revendication 8 ou 9, dans lequel chaque mâchoire (207, 208) s'étend selon une direction essentiellement horizontale et est apte à être déplacée verticalement pour venir enserrer le fût.

11. Dispositif selon l'une de revendications 8 à 10, avec un mécanisme (210) entraînant un déplacement simultané des mâchoires au cours duquel les mâchoires sont équidistantes dudit axe.

12. Dispositif selon l'une des revendications 1 à 11, dans lequel le bâti (202, 203) est monté sur une base (201) autorisant un mouvement de pivotement du bâti autour d'un axe vertical perpendiculaire à l'axe défini par le fût dans sa position de travail.

13. Dispositif selon l'une des revendications 1 à 12, avec des moyens (214) de détection d'une ouverture dans le fût à une position donnée de sa circonférence.

14. Ligne d'assemblage de fût, **caractérisée en ce qu'**elle comprend au moins un dispositif de préhension (20 ; 21 ; 22) selon l'une des revendications 1 à 13.

15. Ligne d'assemblage selon la revendication 14, comprenant au moins un support (13 ; 14) situé à la verticale dudit axe.

16. Ligne d'assemblage selon la revendication 15, comprenant au moins un convoyeur (11, 12) apte à déplacer un fût vers ledit support.

17. Ligne d'assemblage selon l'une des revendications 14 à 16, comprenant:
- des moyens (30, 31) pour placer une semelle au contact du fût ;
- des moyens (205, 301) pour effectuer une rotation concomitante de la semelle et de la partie mobile retenant le fût ;
- des moyens (305) pour réaliser, au moyen de ladite rotation, la soudure d'une partie au moins de la circonférence du fût à la semelle.

18. Ligne d'assemblage de fût, comprenant un dispositif de préhension (20 ; 21 ; 22) selon la revendication 1 ou 2 et une zone de réception (17 ; 18) du fût après passage à travers ladite ouverture.

19. Ligne d'assemblage selon la revendication 18, dans laquelle ladite zone (17 ; 18) est latérale par rapport audit axe.

20. Procédé d'assemblage d'un fût et d'une semelle mettant en oeuvre un dispositif de préhension (20 ; 21 ; 22) d'un fût selon l'une des revendications 1 à 13 **caractérisé en ce qu**'il comprend les étapes suivantes :
- serrage du fût dans une position de travail par des moyens (207, 208) solidaires d'une partie mobile (205) en rotation dans le bâti (202, 203) qui comprend un évidement traversé par le fût ;
- rotation de la partie mobile (205) autour de l'axe défini par le fût dans sa position de travail, permettant ainsi le soudage d'une partie au moins de la circonférence du fût à la semelle.

21. Procédé selon la revendication 20, dans lequel l'outil effectuant le soudage (305) est fixe par rapport au bâti (202, 203) pendant ladite étape de rotation.

22. Procédé selon la revendication 20 ou 21, comprenant une étape de mise au contact du fût et de la semelle préalable à l'étape de rotation.

23. Procédé selon l'une des revendications 20 à 22, comprenant une étape, préalable à l'étape de rotation, de dépôt de soudure sur une seconde partie de ladite circonférence, la partie mobile (205) restant fixe par rapport au bâti (202, 203).

24. Procédé selon l'une des revendications 20 à 23, comprenant les étapes suivantes :
- déplacement du dispositif de préhension (20 ; 21 ; 22) dans une zone (17 ; 18) de réception du fût ;
- dépôt du fût sur ladite zone de réception (17 ; 18) ;
- évacuation latérale du fût à travers une ouverture (204) ménagée dans l'étendue angulaire du bâti (202, 203) autour de l'axe défini par le fût dans sa position de travail.

25. Procédé selon l'une des revendications 20 à 24, comprenant une étape, préalable au soudage, de rotation de la partie mobile (205) jusqu'à la détection d'une ouverture dans le fût.

## Claims

1. Apparatus for gripping a shaft comprising:
- a frame (202, 203) having an aperture through which the shaft is intended to pass;
- clamping means (207, 208) capable of retaining the shaft in a working position, the clamping means (207, 208) being fixed with respect to a portion (205) which is movable in rotation with respect to the frame (202, 203) about the axis defined by the shaft in its working position, **characterised in that**
the frame (202, 203) and the movable portion (205) extend respectively over a part only of the angular extent around said axis in such a way as to provide an opening (204) for the shaft to pass in a direction perpendicular to said axis, said opening (204) opening into said aperture.

2. Apparatus according to claim 1 wherein said axis and said direction are substantially horizontal.

3. Apparatus according to one of claims 1 and 2 wherein the frame comprises an arc member (202) centered on said axis, within which the movable portion (205) is rotatably mounted.

4. Apparatus according to claim 3 wherein said arc member (202) extends in a vertical plane perpendicular to said axis.

5. Apparatus according to claim 3 or claim 4 wherein the arc member (202) is in the general shape of a C

6. Apparatus according to one of claims 3 to 5 wherein the movable portion (205) comprises a rotary ring mounted rotatably in (202) the arc member.

7. Apparatus according to claim 6 wherein the rotary ring is in the general shape of a C.

8. Apparatus according to one of claims 1 to 7 wherein the clamping means comprise a pair of jaws (207, 208) capable of clamping the shaft in the working position thereof.

9. Apparatus according to claim 8 with a motor (209) for driving at least one jaw (207, 208) which is fixed with respect to the movable portion (205).

10. Apparatus according to claim 8 or claim 9 wherein each jaw (207, 208) extends in a substantially horizontal direction and is capable of being displaced vertically to come into clamping engagement with the shaft.

11. Apparatus according to one of claims 8 to 10 with a mechanism (210) for entraining a simultaneous displacement of the jaws, in the course of which the jaws are equidistant from said axis.

12. Apparatus according to one of claims 1 to 11 wherein the frame (202, 203) is mounted on a base (201) enabling a pivotal movement of the frame about a vertical axis perpendicular to the axis defined by the shaft in its working position.

13. Apparatus according to one of claims 1 to 12 with means (214) for detecting an opening in the shaft at a given position on its circumference.

14. A shaft assembly line **characterised in that** it comprises at least one gripping apparatus (20; 21; 22) according to one of claims 1 to 13.

15. An assembly line according to claim 14 comprising at least one support (13; 14) disposed in vertical relationship with said axis.

16. An assembly line according to claim 15 comprising at least one conveyor (11, 12) capable of displacing a shaft towards said support.

17. An assembly line according to one of claims 14 to 16 comprising:
- means (30, 31) for placing a base member in contact with the shaft;
- means (205, 301) for producing attendant rotation of the base member and the movable portion retaining the shaft; and
- means (305) for producing by means of said rotation welding of a part at least of the circumference of the shaft to the base member.

18. A shaft assembly line comprising a gripping apparatus (20; 21; 22) according to claim 1 or claim 2 and a zone (17; 18) for receiving the shaft after passing through said opening.

19. An assembly line according to claim 18 wherein said zone (17; 18) is lateral with respect to said axis.

20. A process for assembly of a shaft and a base member using a gripping apparatus (20; 21; 22) for a shaft according to one of claims 1 to 13 **characterised in that** it comprises the following steps:
- gripping the shaft in a working position by means (207, 208) which are fixed with respect to a portion (205) which is movable in rotation in the frame (202, 203) which comprises an aperture through which the shaft passes; and
- rotation of the movable portion (205) about the axis defined by the shaft in its working position, thus permitting welding of a part at least of the circumference of the shaft to the base member.

21. A process according to claim 20 wherein the tool producing the weld (305) is fixed with respect to the frame (202, 203) during said rotation step.

22. A process according to claim 20 or claim 21 comprising a step of bringing the shaft into contact with the base member prior to the rotation step.

23. A process according to one of claims 20 to 22 comprising a step, prior to the rotation step, of depositing weld on a second part of said circumference, the movable portion (205) remaining fixed with respect to the frame (202, 203).

24. A process according to one of claims 20 to 23 comprising the following steps:
- displacement of the gripping apparatus (20; 21; 22) into a zone (17; 18) for reception of the shaft;
- deposit of the shaft on said reception zone (17; 18); and
- lateral evacuation of the shaft through an opening (204) provided in the angular extent of the frame (202, 203) around the axis defined by the shaft in its working position.

25. A process according to one of claims 20 to 24 comprising a step prior to the welding operation of rotating the movable portion (205) until an opening in the shaft is detected.

## Patentansprüche

1. Vorrichtung zum Greifen eines Schafts, mit:
- einem Gehäuse (202, 203) mit einer Aussparung, die dazu bestimmt ist, von dem Schaft durchquert zu werden;
- Klemmmitteln (207, 208), die den Schaft in einer Arbeitsstellung zu halten vermögen, wobei die Klemmmittel (207, 208) mit einem beweglichen Teil (205) fest verbunden sind, der bezüglich des Gehäuses (202, 203) um die von dem Schaft in seiner Arbeitsstellung definierte Achse herum drehbeweglich ist, **dadurch gekennzeichnet, dass**
sich das Gehäuse (202, 203) und der bewegliche Teil (205) jeweils nur solchermaßen um die Achse herum über einen Teil de Winkelerstreckung erstrecken, dass eine Öffnung (204) zum Hindurchführen des Schafts in einer Richtung lotrecht zur Achse ausgebildet ist, wobei die Öffnung (204) in die Aussparung mündet.

2. Vorrichtung nach Anspruch 1,
bei der die Achse und die Richtung im Wesentlichen horizontal sind.

3. Vorrichtung nach einem der Ansprüche 1 oder 2,
bei der das Gehäuse einen auf die Achse zentrierten Bügel (202) umfasst, in dem der bewegliche Teil (205) drehbeweglich gelagert ist.

4. Vorrichtung nach Anspruch 3,
bei der sich der Bügel (202) in einer Vertikalebene lotrecht zur Achse erstreckt.

5. Vorrichtung nach Anspruch 3 oder 4,
bei der der Bügel (202) allgemein die Form eines C hat.

6. Vorrichtung nach einem der Ansprüche 3 bis 5,
bei der der bewegliche Teil (205) einen im Bügel (202) drehbeweglich gelagerten Drehkranz umfasst.

7. Vorrichtung nach Anspruch 6,
bei der der Drehkranz allgemein die Form eines C hat.

8. Vorrichtung nach einem der Ansprüche 1 bis 7,
bei der die Klemmmittel ein Paar Klemmbacken (207, 208) umfassen, die den Schaft in seiner Arbeitsstellung zu umgreifen vermögen.

9. Vorrichtung nach Anspruch 8,
mit einem Motor (209) zum Antrieb wenigstens einer mit dem beweglichen Teil (205) fest verbundenen Klemmbacke (207, 208).

10. Vorrichtung nach Anspruch 8 oder 9,
bei der sich jede Klemmbacke (207, 208) in eine im Wesentlichen horizontale Richtung erstreckt und zum Umgreifen des Schafts senkrecht verschoben zu werden vermag.

11. Vorrichtung nach einem der Ansprüche 8 bis 10,
mit einem Mechanismus (210), der ein gleichzeitiges Verschieben der Klemmbacken bewirkt, in dessen Verlauf der Abstand der Klemmbacken zur Achse jeweils gleich groß ist.

12. Vorrichtung nach einem der 1 bis 11,
bei der das Gehäuse (202, 203) auf einem Sockel (201) montiert ist, der eine SchwEnkbewegung des Gehäuses um eine senkrechte Achse gestattet, die zu der von dem Schaft in seiner Arbeitsstellung definierten Achse lotrecht ist.

13. Vorrichtung nach einem der Ansprüche 1 bis 12,
mit Mitteln (214) zum Erkennen einer Öffnung im Schaft an einer gegebenen Stelle seines Umfangs.

14. Straße zur Montage eines Schafts,
**dadurch gekennzeichnet, dass** sie wenigstens eine Greifvorrichtung (20; 21; 22) nach einem der Ansprüche 1 bis 13 umfasst.

15. Montagestraße nach Anspruch 14,
mit wenigstens einem lotrecht zur Achse angeordneten Träger (13; 14).

16. Montagestraße nach Anspruch 15,
mit wenigstens einem Förderer (11, 12), der einen Schaft zu dem Träger zu verschieben vermag.

17. Montagestraße nach einem der Ansprüche 14 bis 16,
mit:
- Mitteln (30, 31), um einen Fuß mit dem Schaft in Kontakt zu bringen;
- Mitteln (205, 301), um eine gleichzeitige Drehung des Fußes und der den Schaft haltenden beweglichen Teile auszuführen;
- Mitteln (305), um mithilfe der Drehung das Anschweißen wenigstens eines Teils des Schaftumfangs am Fuß vorzunehmen.

18. Straße zur Montage eines Schafts, mit einer Greifvorrichtung (20; 21; 22) nach Anspruch 1 oder 2 und einem Bereich (17; 18) zur Aufnahme des Schafts nach Hindurchführen durch die Öffnung.

19. Montagestraße nach Anspruch 18,
bei der der Bereich (17; 18) bezüglich der Achse seitlich angeordnet ist.

20. Verfahren zur Montage eines Schafts und eines Mastfußes, unter Verwendung einer Vorrichtung (20; 21; 22) zum Greifen eines Schafts nach einem der Ansprüche 1 bis 13, **dadurch gekennzeichnet, dass** es die folgenden Schritte umfasst:
- Umklammern des Schafts in einer Arbeitsstellung mit Mitteln (207, 208), die mit einem beweglichen Teil (205) fest verbunden sind, der in dem Gehäuse (202, 203) drehbeweglich ist, das eine von dem Schaft durchquerte Aussparung aufweist;
- Drehen des beweglichen Teils (205) um die von dem Schaft in seiner Arbeitssteilung definierte Achse, wodurch das Anschweißen wenigstens eines Teils des Schaftumfangs am Fuß ermöglicht wird.

21. Verfahren nach Anspruch 20,
bei dem das Werkzeug (305), mit dem das Schweißen durchgeführt wird, bezüglich des Gehäuses (202, 203) während des Drehvorgangs ortsfest ist.

22. Verfahren nach Anspruch 20 oder 21,
das einen Schritt umfasst, bei dem der Schaft und der Fuß vor dem Drehen miteinander in Kontakt gebracht werden.

23. Verfahren nach einem der Ansprüche 20 bis 22,
das vor dem Drehen einen Schritt umfasst, bei dem ein Lötmittel auf einem zweiten Teil des Umfangs aufgetragen wird, wobei der bewegliche Teile (205) bezüglich des Gehäuses (202, 203) ortsfest bleibt.

24. Verfahren nach einem der Ansprüche 20 bis 23,
das die folgenden Schritte umfasst:
- Verschieben der Greifvorrichtung (20; 21; 22) in einen Bereich (17; 18) zur Aufnahme des Schafts;
- Ablegen des Schafts in dem Aufnahmebereich (17; 18);
- seitliches Entfernen des Schafts durch die Öffnung (204) hindurch, die in der Winkelerstreckung des Gehäuses (202, 203) um die von dem Schaft in seiner Arbeitsstellung definierte Achse ausgebildet ist.

25. Verfahren nach einem der Ansprüche 20 bis 24,
das vor dem Schweißen einen Schritt umfasst, bei dem der bewegliche Teil (205) soweit gedreht wird, bis eine Öffnung im Schaft erkannt wird.
